# EUROPEAN PATENT APPLICATION

(11) **EP 4 841 857 A1**
(43) Date of publication of application: **18.11.2026**
(21) Application number: 26176064.9
(22) Date of filing: 01.05.2026
(51) Int. Cl.: H02J 7/34, H02J 1/10, H02J 9/06

(54) **PRIORITY-BASED MULTIPLE POWER SOURCE CONTROL SYSTEM, ELECTRICAL DEVICE AND CONTROL METHOD**

(30) Priority: 15.05.2025 US 202519208630
(71) Applicant: TP-Link Systems Inc., Irvine, California 92618 (US)
(72) Inventor: Yang, Kaishuo, Shenzhen 518000 (CN); Liu, Wei, Shenzhen 518000 (CN)
(74) Representative: Marks & Clerk LLP

(57) **Abstract**

The present disclosure provides a priority-based multiple power source control system, and electrical device and a method for the system. The priority-based multiple power source control system includes: a multiple power source switching circuit, a priority control circuit, a controller and a charging management circuit. The multiple power source switching circuit connects a first power source, a second power source and a third power source. The priority control circuit determines the priority of the first, the second and the third power source. The controller obtains a voltage value of the third power source and connection status of the first power source and the second power source, and generates a control signal for controlling charging of the third power source. The charging management circuit selectively uses the first power source or the second power source to charge the third power source based on the control signal.

## Description

### CROSS REFERENCE TO RELATED APPLICATIONS

This application claims the priority to and benefits of U.S. non-Provisional Patent Application No. 19/208,630, filed on May 15, 2025. The aforementioned patent application is hereby incorporated by reference in its entirety.

### TECHNICAL FIELD

The present disclosure relates to power source, and more specifically, to a priority-based multiple power source control system, and electrical device and a control method therefor.

### BACKGROUND

Electronic devices currently on the market usually rely on a single main power source (such as lithium batteries, dry batteries) for power, or use a dual-power source solution that combines the main power source with an external power source (such as using an emergency power source). When the main power source is exhausted, the user needs to remove it to charge it. During the charging of the main power source, the electronic device may not be able to be used due to lack of power source. In addition, the common multiple power switching power source solution is implemented through the ideal diode of the integrated circuit or embedded software in the power management chip, which increases the power energy loss or design cost to a certain extent.

Therefore, there is a need for a scheme for a multiple power source switching, which can ensure the stable operation of electronic devices under different power source conditions, improve system efficiency and reliability, and meet the needs of complex application scenarios.

### SUMMARY

The present disclosure provides a priority-based multiple power source control system, an electrical device having the priority-based multiple power source control system and a method used for the priority-based multiple power source control system.

According to an aspect of the present disclosure, there is provided a priority-based multiple power source control system including a multiple power source switching circuit, a controller and a charging management circuit. The multiple power source switching circuit includes a first power source interface configured to connect a first power source of a first type, a second power source interface configured to connect a second power source of a second type, a third power source interface configured to connect a third power source of a rechargeable type, a power source output interface, configured to select one of the first power source, the second power source and the third power source as output power source, and a priority control circuit, configured to enable the power source output interface to select the first power source in response to the first power source being connected, and enable the power source output interface to select the second power source in response to the second power source being connected and the first power source being not connected. The controller is configured to obtain a voltage value of the third power source and connection statuses of the first power source and the second power source, and generate a control signal for controlling the charging of the third power source based on the voltage value and the connection statuses. The charging management circuit is configured to in response to the control signal of the controller, selectively use the first power source or the second power source to charge the third power source based on the control signal of the controller.

According to another aspect of the present disclosure, there is provided an electrical device, including: a built-in chargeable power source and a priority-based multiple power source control system. The priority-based multiple power source control system including a multiple power source switching circuit, a controller and a charging management circuit The multiple power source switching circuit includes a first power source interface configured to connect a first power source of a first type, a second power source interface configured to connect a second power source of a second type, a third power source interface configured to connect a third power source of a rechargeable type, a power source output interface, configured to select one of the first power source, the second power source and the third power source as output power source, and a priority control circuit, configured to enable the power source output interface to select the first power source in response to the first power source being connected, and enable the power source output interface to select the second power source in response to the second power source being connected and the first power source being not connected. The controller is configured to obtain a voltage value of the third power source and connection statuses of the first power source and the second power source, and generate a control signal for controlling the charging of the third power source based on the voltage value and the connection statuses. The charging management circuit is configured to in response to the control signal of the controller, selectively use the first power source or the second power source to charge the third power source based on the control signal of the controller.

According to another aspect of the present disclosure, there is provided a control method for a priority-based multiple power source control system, wherein the multiple power source control system being able to connect a first power source of a first type, a second power source of a second type, and a third power source of a rechargeable type. The method includes: in response to the first power source being connected, a power source output interface of the multiple power source control system selects the first power source as an output power source, and in response to the second power source being connected and the first power source being not connected, the power output interface selects the second power source as the output power source; acquiring a voltage value of the third power source and connection status of the first power source and the second power source to generate a control signal for controlling charging of the third power source based on the voltage value and the connection statuses; and selectively using the first power source or the second power source to charge the third power source based on the control signal of the controller.

At least based on the above embodiments of the present disclosure, a priority-based multiple power source control system and a control method therefor may be realized, which has better compatibility and scalability, and can realize self-arbitration switching and efficient management of multiple power supplies, ensure the stable operation of electronic devices under different power source conditions, improve system efficiency and reliability, and meet the needs of complex application scenarios.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements. In the accompanying drawings.
Fig. 1 is a schematic diagram illustrating an exemplary priority-based multiple power source control system according to an embodiment of the present disclosure;
Fig. 2 is a schematic diagram illustrating an exemplary charging control circuit according to an embodiment of the present disclosure;
Fig. 3 is a system circuit diagram illustrating an exemplary priority-based multiple power source control system according to an embodiment of the present disclosure;
Fig. 4 is a schematic diagram illustrating the procedure using an emergency power source as output power source in according to an embodiment of the present disclosure;
Fig. 5 is a schematic diagram illustrating the procedure using a main power source as output power source in according to an embodiment of the present disclosure;
Fig. 6 is a schematic diagram illustrating the procedure using a secondary power source as output power source in according to an embodiment of the present disclosure;
Fig. 7 is a schematic diagram illustrating an electrical device according to an embodiment of the present disclosure;
Fig. 8 is a flowchart illustrating a control method for the priority-based multiple power source control system in according to an embodiment of the present disclosure;
Fig. 9 is a schematic diagram illustrating an exemplary priority-based multiple power source control system according to another embodiment of the present disclosure.

### DETAILED DESCRIPTION

The technical solution of the present disclosure will be clearly and completely described below in conjunction with accompanying drawings. The described embodiments are part of embodiments of the present disclosure, but not all of them. Based on the embodiments in the present disclosure, all other embodiments acquired by ordinary skilled in the art without making any creative efforts fall within the scope of protection of the present disclosure.

Some of the drawings may not depict all the components of a given method, device and system. Like reference numerals may be used to denote like features throughout the specification and drawings.

The existing power source solution has the following technical problems:
1. The vulnerability of the single power source mode: the single main power source causes the electronic device to be unable to be used due to the lack of power source when the power is exhausted or fails, which brings inconvenience to the user.
2. Insufficient compatibility and scalability: the common multiple power switching power source scheme is implemented through the ideal diode of the integrated circuit or embedded software fixed in the power management chip, which is difficult to be compatible with devices with multiple voltages or power source specifications, and can only meet the power switching within a specific voltage value range. The stability and flexibility of the power switching are low.

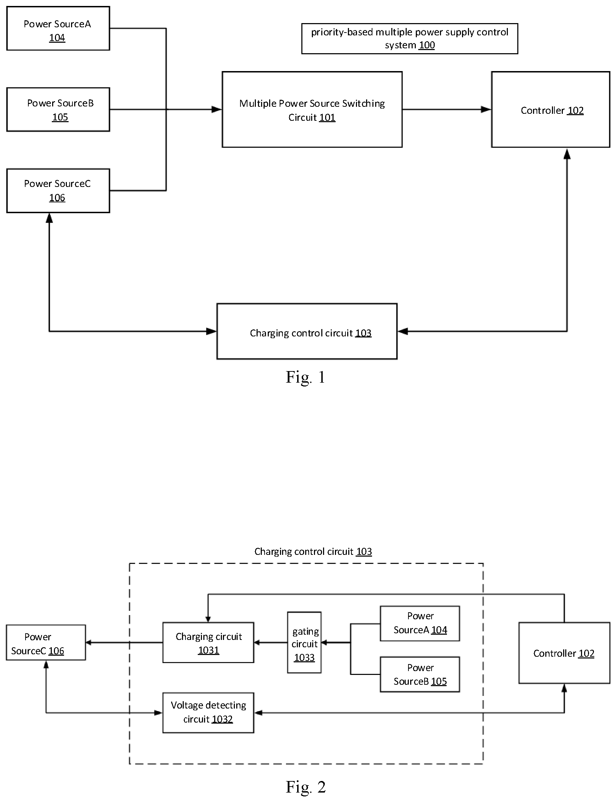

Fig. 1 is a schematic diagram illustrating an exemplary priority-based multiple power source control system according to an embodiment of the present disclosure.

Referring to Fig. 1, a priority-based multiple power source control system 100 according to an embodiment of the present disclosure includes a multiple power source switching circuit 101, a controller 102 and a charging management circuit 103.

The multiple power source switching circuit 101 includes a first power source interface configured to connect a first power source 104 of a first type, a second power source interface configured to connect a second power source 105 of a second type, a third power source interface configured to connect a third power source 106 of a rechargeable type, and a power source output interface configured to select one of the first power source, the second power source and the third power source as output power source.

For example, the first power source 104 may be an adapter power source (i.e., an emergency power source such as an adapter power source, a power pack), the second power source 105 may be an mobile power source (i.e., a main power source such as lithium batteries, dry batteries), and the third power source 106 may be a chargeable power source, which is built-in an electrical device accommodating the priority-based multiple power source control system 100.

The multiple power source switching circuit 101 can determine the priority of using multiple power supplies. As shown in Figure 1, when the power source A 104, the power source B 105, and the power source C 106 together form a multiple power source scheme, the power source priority can be determined through the multiple power source switching circuit 101: the power source A 104 > the power source B 105 > the power source C 106, that is, when and only when the power source A 104 and the power source B 105 are not connected, the power source C 106 is used as power source, and the power source C 106 is prohibited in other cases. As a result, even in a case the power source A 104 and/or the power source B 105 cannot operate normally due to a fault, the power of the power source C 106 can be selected automatically. It can ensure that the stable operation of electronic devices under different power source conditions and, improve system efficiency and reliability. In addition, the power of the power source C 106 would not be wasted and the continuous working time of the electrical device can be extended.

In addition, since the power source C 106 is a chargeable power source, it can be charged by the power source A 104 or the power source B 105 under the control of the controller 102. As a result, the continuous working time of the electrical device can be extended.

Fig. 2 is a schematic diagram illustrating an exemplary charging control circuit according to an embodiment of the present disclosure.

As shown in Fig. 2, the charging management circuit 103 includes: a voltage detection circuit 1031 configured to detect the voltage value of the third power source and provide the detected voltage value to the controller, and a charging circuit 1032 configured to receive the control signal from the controller 103 and selectively use the power source A 104 or the power source B 105 to charge the power source C 106. According to the priority determined by the multiple power source switching circuit 101, the charging circuit 1032 would use the power source A 104 to charge the power source C 106 if the power source A 104 and the power source B 105 to charge the power source C 106 are both connected. A gating circuit 1033 can be used to select the power source A 104 or the power source B 105. For example, the gating circuit 1033 may use MOS transistor as the gating circuit. The MOS transistor can use PMOS or NMOS transistor as needed.

In one embodiment, the controller 102 generates the control signal for controlling charging of the power source C 106 in response to the detected voltage value of the power source C 106 being lower than a predetermined threshold.

As shown in Fig 2, when the power source A 104, the power source B 105, and the power source C 106 together form a multiple power source scheme, the input end of the charging circuit 1032 is connected to the combined output end of the power source except power source C in the multiple power source, the output end of the charging circuit 1032 is connected to the power source C 106, the input end of the voltage detection circuit 1031 is connected to the power source C 106, and the output end of the voltage detection circuit 1031 is connected to the I/O port of the controller 102. When the power supplies A and B are connected, the charging management of power source C is implemented through the controller 102. The power source C 106 is charged only when and only when it does not meet the charging threshold requirements. In other cases, charging of the power source C 106 is prohibited to avoid frequent charging of the power source C 106. As a result, it can reduce the power consumption of the electrical devices and increase life of the built-in power source, so as to improve system efficiency and reliability.

The detailed descriptions of the voltage detection circuit 1031, the charging circuit 1032, and the MOS gating circuit 1033 are omitted.

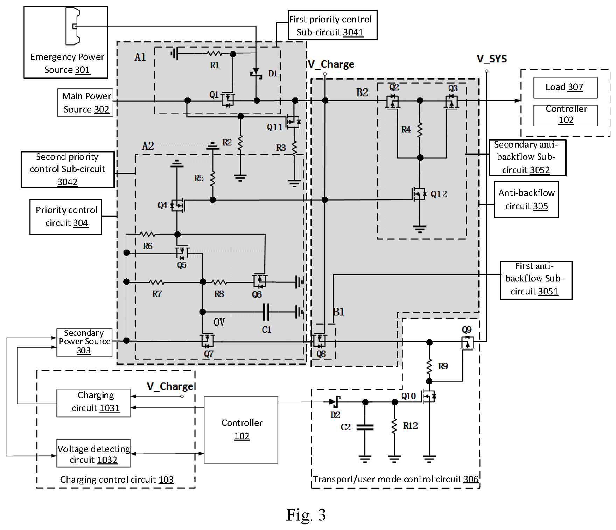

Fig. 3 is a system circuit diagram illustrating an exemplary priority-based multiple power source control system according to an embodiment of the present disclosure.

As shown in Fig. 3, the multiple power source switching circuit 101 further includes a priority control circuit 304. The priority control circuit 304 is configured to in response to the first power source (the emergency power source 301) being connected, enable the power source output interface V_SYS to output the first power source but not output the second power source (the main power source 302). In addition, the priority control circuit 304 is configured to in response to the first power source or the second power source being connected, enable the power source output interface V_SYS to output the first power source or the second power source but not output the third power source (the secondary power source 306).

As shown in Fig. 3, the priority control circuit 304 includes a first priority control sub-circuit 3041 and a second priority control sub-circuit 3042. The first priority control sub-circuit 3041 is configured to in response to the first power source (the emergency power source 301) being connected, enable the power output interface V_SYS to output the first power source but not output the second power source (the main power source 302). In addition, the first priority control sub-circuit 3041 is configured to in response to the second power source (the main power source 302) being connected and the first power source (the emergency power source 301) not being connected, enable the power output interface to output the second power source (the main power source 302).

The first priority control sub-circuit 3041 includes: a first PMOS transistor Q1, whose gate is connected to the first power interface, whose drain is connected to the second power interface, and whose source is connected to a first node (V_Charge); a diode D1, whose anode is connected to the first power interface, and whose cathode is connected to the first node. The first priority control sub-circuit 3041 includes a first resister R1, whose first end is grounded second end is connected to the gate of the first PMOS transistor Q1 and the anode of the diode D 1.

The second priority control sub-circuit 3042 includes: a fourth NMOS transistor Q4, whose gate is connected to the first node and grounded via a fifth resistor, and whose source is grounded; a fifth PMOS transistor Q5, whose gate is connected to the drain of the fourth NMOS transistor Q4, and whose source is connected to the third power source; a sixth NMOS transistor Q6, whose gate is connected to the drain of the fourth NMOS transistor Q4 and connected to the third power source via a sixth resistor R6, whose source is grounded, and whose drain is connected to the third power source via a seventh resistor R7 and a eighth resistor R8; a seventh PMOS transistor Q7, whose gate is connected to the drain of the fifth PMOS transistor Q5 and a connection point of the seventh resistor R7 and the eighth resistor R8, and whose source is connected to the third power source.

The first priority control sub-circuit 3041 can implement the priority control switch of the emergency power source 301 > the main power source 302. When the emergency power source 301 is connected, the gate of PMOS Q1 is pulled up, and the emergency power source is connected to the source of Q1 through diode D1, so that the Vgs of Q1 is less than its Vgs(th), Q1 is disconnected, and the main power source cannot output; when the emergency power source is not connected, PMOS Q1 is turned on because the gate is pulled down by the pull-down resistor R1, and the main power source can output normally.

The second priority control sub-circuit 3042 can implement the priority control switch of the emergency power source 301/ the main power source 302 > the secondary power source 303. When the emergency power source 301or the main power source 302 is connected, NMOS Q4 is turned on because the gate is pulled high, and its source is grounded, so that the gate of NMOS Q6 is pulled low. NMOS Q6 is disconnected, and PMOS Q5 is turned on because the gate is pulled low, so that the secondary power source 303 is connected to the gate of PMOS Q7 on its own forward path. PMOS Q7 is disconnected because the gate is pulled high, and the secondary power source 303 cannot be output. When the emergency power source 301 or the main power source 302 is not connected, NMOS Q4 is disconnected because the gate is pulled low by resistor R5, and the secondary power source 303 pulls up the gate of PMOS Q5 and the gate of NMOS Q6 through the pull-up resistor R6. PMOS Q5 is disconnected, NMOS Q6 is turned on, and the gate of PMOS Q7 is pulled down through the series voltage divider of resistors R7 and R8, so that PMOS Q7 is turned on and the secondary power source 303 is output.

The function of capacitor C1 is to realize the controllable power-on speed of the secondary power source 303 and ensure the stability of multiple power source switching. In addition, a fast power-off switch is formed by PMOS Q11, resistors R2 and R3 to ensure that the secondary power source 303 can be quickly switched when the emergency power source 301 or the main power source 302 is unplugged.

As shown in Fig. 3, the priority-based multiple power source control system 100 further includes an anti-backflow circuit 305, which is configured to prevent the output power source from being applied to the third power source (the secondary power source 303) when the first power source (the emergency power source 301) or the second power source (the main power source 302) is selected, or to prevent the output power source from being applied to the first power source or the second power source and to prevent the output power source from being applied to the priority control circuit when the third power source is selected.

The anti-backflow circuit 305 includes a first anti-backflow sub-circuit 3051, which is configured to prevent the output power source from being applied to the third power source when the first power source or the second power source is selected.

The first anti-backflow sub-circuit 3051 includes an eighth PMOS transistor Q8, whose gate is connected to the first node, whose source is connected to the power output interface, and whose drain is connected to the source of the seventh PMOS transistor Q7.

The anti-backflow circuit 305 includes a second anti-backflow sub-circuit 3052, which is configured to prevent the output power source from being applied to the first power source or the second power source when the third power source is selected, and prevent the output power source from being applied to the priority control circuit.

The second anti-backflow sub-circuit 3052 includes: a second PMOS transistor Q2, whose gate is connected to a first end of a fourth resistor, whose source is connected to a second end of the fourth resistor, and whose drain is connected to the first node; a third PMOS transistor Q3, whose gate is connected to the first end of the fourth resistor R4, whose source is connected to the second end of the fourth resistor R4, and whose drain is connected to the power output interface; a third NMOS transistor Q3, whose gate is connected to the first node, whose source is grounded, and whose drain is connected to the first end of the fourth resistor R4.

The first anti-backflow sub-circuit 3051 can prevent the output voltage V_SYS from being directly applied to both ends of the secondary power source 303 when the emergency power source 301 or the main power source 302 is in operation, causing damage to the secondary power source 303. When the emergency power source 301 or the main power source 302 is in operation, the PMOS Q8 is disconnected due to the gate being pulled high, and the output power source V_SYS cannot reach the secondary power source 303 through the PMOS Q8. When the emergency power source 301 or the main power source 302 is not connected, the gate of the PMOS Q8 is pulled down by the pull-down resistor R5, and PMOS Q8 is turned on to ensure the output of the secondary power source 303.

The second anti-backflow sub-circuit 3052 can prevent the output power source V_SYS from flowing back to V_Charge when the secondary power source 303 is in operation, affecting the control loop of the secondary power source 303 itself, and also prevent the output power source V_SYS from flowing back to both ends of the main power source 302, causing damage to it. When the emergency power source 301 or the main power source 302 is connected, the gate of the NMOS Q12 is pulled high, NMOS Q12 is turned on, and a voltage difference is generated across the resistor R4, so that the PMOS Q2 and PMOS Q3, whose gate and source are connected to through R4, are turned on, and the emergency power source 301 or the main power source 302 can output normally. When the emergency power source 301 and the main power source 302 are not connected and the secondary power source 303 is used, the gate of NMOS Q12 is pulled down by the pull-down resistor R5, NMOS Q12 is disconnected. The gate and source of PMOS Q2 and Q3 are connected through the resistor R4. There is no voltage difference across R4, that is, Vgs=0, Q2 and Q3 are disconnected, so that the V_SYS output by the secondary power source cannot pass through Q3.

The priority-based multiple power source control system 100 further includes a transport/user mode control circuit 306, which is configured to prohibit the third power source from discharging when an electronic device accommodating the multiple power source control system 100 is not activated and in a transport mode, and to allow the third power source to discharge in response to the electronic device being activated and in a user mode.

The transport/user mode control circuit 306 includes: a second diode D2, whose anode is connected to the controller; a ninth NMOS transistor Q9, whose gate is connected to a first end of a ninth resistor R9, whose drain is connected to a second end of the ninth resistor R9 and the source of the eighth PMOS transistor Q8, whose source is connected to the power source output interface, and a tenth PMOS transistor Q10, whose gate is connected to the cathode of the second diode D2, whose drain is connected to the first end of the ninth resistor R9 and the gate of the ninth NMOS transistor Q9, and whose source is grounded.

When there is a built-in power source in the multiple power source, a level conversion circuit is composed of NMOS Q9 and PMOS Q10. In the transport mode, the electrical device is in the power-off state, the I/O port of the controller 102 outputs a low level, the gate of PMOS Q10 is pulled down by the pull-down resistor R12, PMOS Q10 is disconnected. The gate and source of NMOS Q9 are connected through the resistor R9, and its gate-source voltage is 0, NMOS Q9 is disconnected. The secondary power source 303 cannot supply power. In the user mode, the electrical device is in the power source state, the I/O port of the controller 102 outputs a high level, the gate of PMOS Q10 is pulled up, PMOS Q10 is turned on. The gate of NMOS Q9 is pulled down, NMOS Q9 is turned on. The secondary power source 303 can supply power if the priority conditions are met. The role of the diode D2 and the capacitor C2 is to maintain the gate voltage of PMOS Q10 to prevent the system from being temporarily powered off when switching between multiple power supplies, which may cause the transport/user mode control switch that depends on the controller I/O port to fail.

In the present disclosure, when there is a built-in power source in the multiple power supplies, it can realize transportation/user mode control, so as to prevent the built-in power source from discharging due to external mis-operation or abnormal environment, which may cause power loss in the built-in power source.

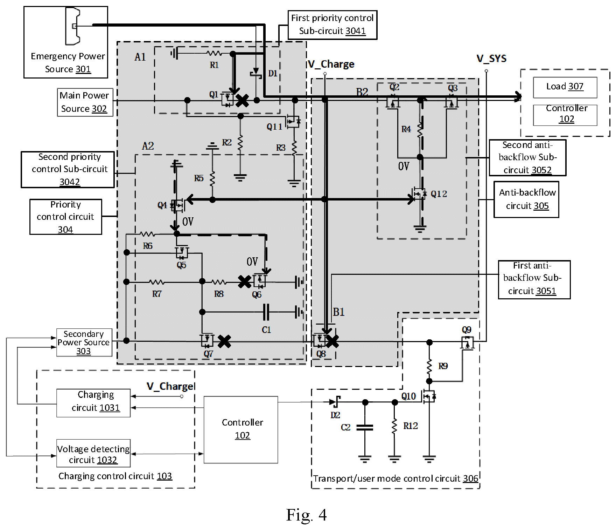

Fig. 4 is a schematic diagram illustrating the procedure using an emergency power source as output power source in according to an embodiment of the present disclosure. As shown in Fig. 4, when the emergency power source 301 is connected, the first PMOS transistor Q1 of the first priority control sub-circuit 3041 is turned off, and the second PMOS transistor Q2, the third PMOS transistor Q3 and the third NMOS transistor Q3 of the second anti-backflow sub-circuit 3052 are turned on, so that the power output interface V_SYS outputs the first power source the emergency power source 301.

As shown in Fig. 4, the emergency power source 301 passes the first priority control sub-circuit 3041, and turns on the second anti-backflow sub-circuit 3052 and outputs to V_SYS. At the same time, the gate of NMOS Q4 is pulled high, and the forward path switch Q7 of the secondary power source 305 is disconnected through the second priority control sub-circuit 3042, and the gate of PMOS Q5 is pulled high, and the first anti-backflow sub-circuit 3051 operates to implement the anti-backflow function of the secondary power source.

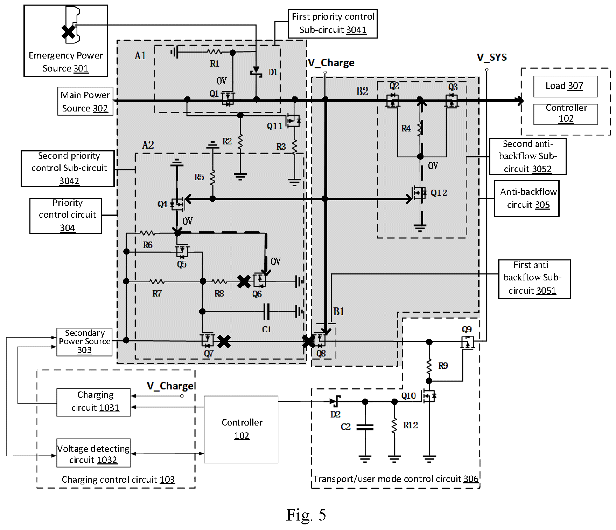

Fig. 5 is a schematic diagram illustrating the procedure using a main power source as output power source in according to an embodiment of the present disclosure. As shown in Fig. 5, in response to the main power source 302 being connected and the emergency power source 301 not being connected, the first PMOS transistor Q1 of the first priority control sub-circuit 3041 is turned on, and the second PMOS transistor Q2, the third PMOS transistor Q3 and the third NMOS transistor Q3 of the second anti-backflow sub-circuit 3052 are turned on, so that the power output interface V_SYS outputs the emergency power source 301. The eighth PMOS transistor Q8 of the first anti-backflow sub-circuit 3051 is turned off to prevent the output voltage from being applied to the secondary power source 303.

As shown in Fig. 5, when the emergency power source 301 is not connected and the main power source 302 is connected, the gate of PMOS Q1 is pulled low and PMOS Q1 is turned on. The main power source 302 passes the first priority control sub-circuit 3041, and turns on the second anti-backflow sub-circuit 3052 and outputs to V_SYS. At the same time, the gate of NMOS Q4 is pulled high, and the forward path switch Q7 of the secondary power source 305 is disconnected through the second priority control sub-circuit 3042, and the gate of PMOS Q5 is pulled high, and the first anti-backflow sub-circuit 3051 operates to implement the anti-backflow function of the secondary power source.

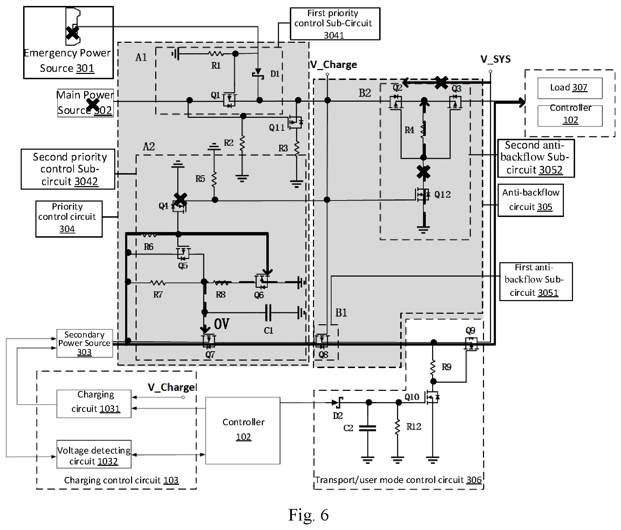

Fig. 6 is a schematic diagram illustrating the procedure using a secondary power source as output power source in according to an embodiment of the present disclosure. As shown in Fig. 6, in response to the emergency power source 301 and the main power source 302 not being connected and the secondary power source 303 being connected, the seventh PMOS transistor Q7 of the second priority control sub-circuit 3042 is turned on, and the eighth PMOS transistor Q8 of the first anti-backflow sub-circuit 3051 is turned on, so that the power output interface V_SYS outputs the secondary power source 303, and the second PMOS transistor Q2, the third PMOS transistor Q3 and the third NMOS transistor Q3 of the second anti-backflow sub-circuit 3052 are turned off to prevent the output voltage from being applied to the emergency power source 301 and the main power source 302.

As shown in Fig. 6, when the emergency power source 301 and the main power source 302 are both disconnected and the secondary power source 303 is used, the gate of NMOS Q4 is pulled down by resistor R5, and the secondary power source 303 can turn on NMOS Q6 by itself. The resistors R7 and R8 divide the voltage so that the gate of PMOS Q7 is pulled down, and Q7 is turned on. At this time, PMOS Q8 is also turned on because the gate is pulled down, and the secondary power source is output to V_SYS. At the same time, since the second anti-backflow sub-circuit 3052 is disconnected, V_SYS will not flow back to the path of the main power source 302 and emergency power source 301.

Therefore, as shown in Figs. 3-6, the priority-based multiple power source control system is designed based on PMOS and NMOS. According to the connection of multiple power supplies, the output power source is switched according to the preset power source priority. Under different power source conditions (i.e., the emergency power source 301, the main power source 302, or the secondary power source 303 is selected), it can realize self-arbitration switching and efficient management of multiple power supplies, ensure the stable operation of electronic devices. As a result, it can has better switching flexibility and adaptability.

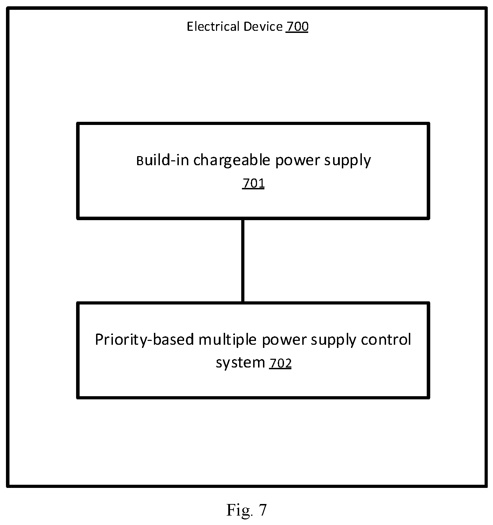

Fig. 7 is a schematic diagram illustrating an electrical device according to an embodiment of the present disclosure. As shown in Fig. 7, the electrical device 700 includes a built-in chargeable power source 701 and a priority-based multiple power source control system 702.

The priority-based multiple power source control system 702 is basically same as the priority-based multiple power source control system 100 described above. The details of priority-based multiple power source control system 702 are omitted.

In the electrical device 700, a third power source interface of the priority-based multiple power source control system 702 is configured to connect the built-in chargeable power source 701.

Similar to the priority-based multiple power source control system 100, the priority-based multiple power source control system 702 also can include an anti-backflow circuit, which is configured to prevent the output power source from being applied to the chargeable power source when the first power source or the second power source is selected, or to prevent the output power source from being applied to the first power source or the second power source and to prevent the output power source from being applied to the priority control circuit when the chargeable power source is selected.

Similar to the priority-based multiple power source control system 100, the priority-based multiple power source control system 702 also can include a transport/user mode control circuit, which is configured to prohibit the chargeable power source from discharging when an electronic device accommodating the multi-way power control system is not activated and in a transport mode, and to allow the chargeable power source to discharge in response to the electronic device being activated and in a user mode.

Similar to the priority-based multiple power source control system 100, the priority-based multiple power source control system 702 also can include a controller. The controller generates the control signal for controlling charging of the chargeable power source in response to the detected voltage value of the chargeable power source being lower than a predetermined threshold.

In the electrical device 700, the first power source is an adapter power source, and the second power source is a mobile power source. In addition, the first power source has a higher priority than the second power source to be selected as the output power source, and the second power source has a higher priority than the chargeable power source to be selected as the output power source.

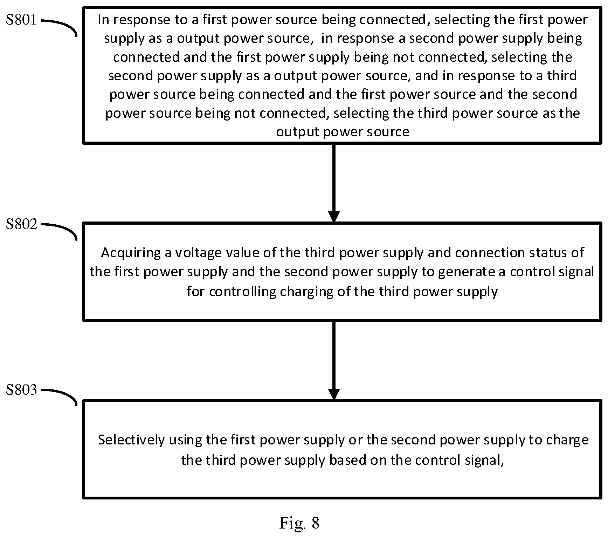

Fig. 8 is a flowchart illustrating a control method 800 for the priority-based multiple power source control system in according to an embodiment of the present disclosure. Method 800 may be implemented by the priority-based multiple power source control system 100 in Fig. 1 and the priority-based multiple power source control system 702 in Fig. 7. The multiple power source control system is able to connect a first power source of a first type, a second power source of a second type, and a third power source of a rechargeable type.

Referring to Fig. 8, method 800 may include steps S801-S803.

At step S801, in response to the first power source being connected, a priority control circuit of the multiple power source control system selects the first power source as an output power source, and in response to the second power source being connected and the first power source being not connected, the priority control circuit selects the second power source as the output power source, in response to the third power source being connected and the first power source and the second power source being not connected, the priority control circuit selects the third power source as the output power source . That is, when the first power source, the second power source and the third power source are connected, the priority control circuit only selects the first power source as output power source. When the first power source is not connected and the second power source and the third power source are connected, the priority control circuit only selects the second power source as output power source.

At step S802, acquiring a voltage value of the third power source and connection status of the first power source and the second power source to generate a control signal for controlling charging of the third power source.

At step S803, in response to the control signal, selectively using the first power source or the second power source to charge the third power source.

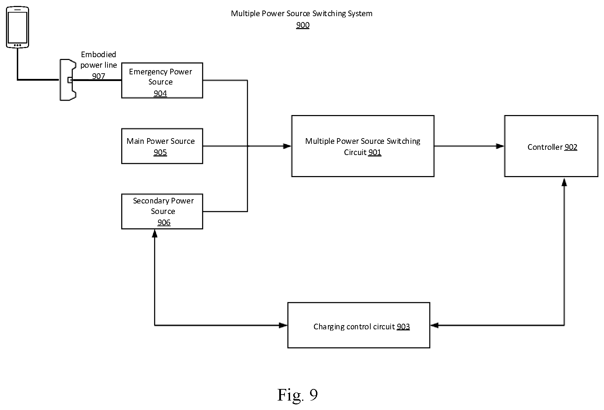

Fig. 9 is a schematic diagram illustrating an exemplary priority-based multiple power source control system according to another embodiment of the present disclosure.

As shown in Fig. 9, the difference between the priority-based multiple power source control system 900 and the priority-based multiple power source control system 100 lies in that the priority-based multiple power source control system 900 further comprises a built-in power line 907. A first end of the built-in power line 907 has a predetermined type of interface (for example, Type C interface, USB interface and the like, or a combination of multiple type of interface), which is suitable for being connected to an external power source, and a second end of the built-in power line 907 is connected to the emergency power source 904.

The multiple power source switching circuit 901, the controller 902, the charging control circuit 903, the emergency power source 904, the main power source 905 and the secondary power source 906 are same as the multiple power source switching circuit 101, the controller 102, the charging control circuit 103, the power source A 104, the power source B 105 and the power source C 106. The detailed descriptions are omitted.

With the built-in power line 904, when the multiple power sources contain an emergency power source, the emergency power source can be directly connected to an external power source through the built-in power line 904, which eliminates the step of finding a matching power line for the user in emergency, and improves the convenience for the user.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

An expression such as "according to", "based on", "depend on", and so on as used in the disclosure does not mean "according only to", "based only on", or "dependent only on", unless it is explicitly otherwise stated. In other words, such expression generally means "according at least to", "based at least on", or "depend at least on" in the disclosure.

Any reference in the disclosure to an element using the designation "first", "second" and so forth is not intended to comprehensively limit the number or order of such elements. These expressions may be used in the disclosure as a convenient method for distinguishing two or more units. Thus, a reference to a first unit and a second unit does not imply that only two units may be employed or that the first unit must precede the second unit in some form.

The term "determining" used in the disclosure may include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth may also be regarded as "determining". That is, regarding "determining", several actions may be regarded as "determining".

The terms such as "connected", "coupled" or any of their variants used in the disclosure refer to any connection or combination, direct or indirect, between two or more units, which may include the following situations: between two units that are "connected" or "coupled" with each other, there are one or more intermediate units. The coupling or connection between the units may be physical or logical or may also be a combination of the two. As used in the disclosure, two units may be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

It should be noted that the above description is only some embodiments of the present disclosure and an illustration of the applied technical principles. It should be understood by those skilled in the art that the present disclosure scope involved in the present disclosure is not limited to the technical solutions resulting from specific combinations of the above technical features, but also encompasses other technical solutions resulting from any combination of the above technical features or their equivalents without departing from the above disclosed concept, for example, the technical solutions formed by replacing between the above features and the technical features with similar functions disclosed in the present disclosure (but not limited hereto).

The present disclosure has been described in detail above, but it is obvious to those skilled in the art that the present disclosure is not limited to the embodiments described in the disclosure. The present disclosure may be implemented as a modified and changed form without departing from the spirit and scope of the present disclosure defined by the description of the claims. Therefore, the description in the disclosure is for illustration and does not have any limiting meaning to the present disclosure.

## Claims

1. A priority-based multiple power source control system, comprising:
a multiple power source switching circuit, including:
a first power source interface configured to connect a first power source of a first type,
a second power source interface configured to connect a second power source of a second type,
a third power source interface configured to connect a third power source of a rechargeable type,
a priority control circuit configured to select the first power source as an output power source in response to the first power source being connected, select the second power source as the output power source in response to the second power source being connected and the first power source being not connected, and select the third power source as the output power source in response to the third power source being connected and the first power source and the second power source being not connected;
a controller configured to obtain a voltage value of the third power source and connection statuses of the first power source and the second power source, and generate a control signal for controlling the charging of the third power source based on the voltage value and the connection statuses; and
a charging management circuit configured to selectively use the first power source or the second power source to charge the third power source based on the control signal of the controller.

2. The system according to claim 1, wherein the priority control circuit further comprises:
a first priority control sub-circuit configured to select the first power source and not output the second power source in response to the first power source being connected, and select the second power source in response to the second power source being connected and the first power source being not connected; and
a second priority control sub-circuit, configured to select the third power source in response to the first power source and the second power source not being selected by the first priority control sub-circuit.

3. The system according to claim 2, wherein,
the first priority control sub-circuit comprises:
a first PMOS transistor Q1, whose gate is connected to the first power interface, whose drain is connected to the second power interface, and whose source is connected to a first node,
a diode D1, whose anode is connected to the first power interface, and whose cathode is connected to the first node,
the second priority control sub-circuit comprises:
a fourth NMOS transistor Q4, whose gate is connected to the first node and grounded via a fifth resistor, and whose source is grounded,
a fifth PMOS transistor Q5, whose gate is connected to the drain of the fourth NMOS transistor Q4, and whose source is connected to the third power source,
a sixth NMOS transistor Q6, whose gate is connected to the drain of the fourth NMOS transistor Q4 and connected to the third power source via a sixth resistor, whose source is grounded, and whose drain is connected to the third power source via a seventh resistor and a eighth resistor;
a seventh PMOS transistor Q7, whose gate is connected to the drain of the fifth PMOS transistor Q5 and a connection point of the seventh resistor and the eighth resistor, and whose source is connected to the third power source.

4. The system according to claim 3, further comprises:
an anti-backflow circuit, configured to prevent the output power source from being applied to the third power source when the first power source or the second power source is selected, or to prevent the output power source from being applied to the first power source and the second power source and to prevent the output power source from being applied to the priority control circuit when the third power source is selected.

5. The system according to claim 4, wherein the anti-backflow circuit comprises:
a first anti-backflow sub-circuit, configured to prevent the output power source from being applied to the third power source when the first power source or the second power source is selected, comprises:
an eighth PMOS transistor Q8, whose gate is connected to the first node, whose source is connected to a power output interface, and whose drain is connected to the source of the seventh PMOS transistor Q7,
an second anti-backflow sub-circuit, configured to prevent the output power source from being applied to the first power source or the second power source when the third power source is selected, and prevent the output power source from being applied to the priority control circuit, comprises:
a second PMOS transistor Q2, whose gate is connected to a first end of a fourth resistor, whose source is connected to a second end of the fourth resistor, and whose drain is connected to the first node,
a third PMOS transistor Q3, whose gate is connected to the first end of the fourth resistor, whose source is connected to the second end of the fourth resistor, and whose drain is connected to the power output interface,
a twelfth NMOS transistor Q12, whose gate is connected to the first node, whose source is grounded, and whose drain is connected to the first end of the fourth resistor.

6. The system according to claim 5, wherein, in response to the first power source being connected, the first PMOS transistor Q1 of the first priority control sub-circuit is turned off, and the second PMOS transistor Q2, the third PMOS transistor Q3 and the twelfth NMOS transistor Q12 of the second anti-backflow sub-circuit are turned on, so that the power output interface outputs the first power source, and
the eighth PMOS transistor Q8 of the first anti-backflow sub-circuit is turned off to prevent the output power source from being applied to the third power source.

7. The system according to claim 5, wherein, in response to the second power source being connected and the first power source being not connected, the first PMOS transistor Q1 of the first priority control sub-circuit is turned on, and the second PMOS transistor Q2, the third PMOS transistor Q3 and the third NMOS transistor Q3 of the second anti-backflow sub-circuit are turned on, so that the power output interface outputs the second power source, and
the eighth PMOS transistor Q8 of the first anti-backflow sub-circuit is turned off to prevent the output voltage from being applied to the third power source.

8. The system according to claim 5, wherein, in response to neither the first power source nor the second power source being connected and the third power source being connected, the seventh PMOS transistor Q7 of the second priority control sub-circuit is turned on, and the eighth PMOS transistor Q8 of the first anti-backflow sub-circuit is turned on, so that the power output interface outputs the third power source, and
the second PMOS transistor Q2, the third PMOS transistor Q3 and the twelfth NMOS transistor Q12 of the second anti-backflow sub-circuit are turned off to prevent the output voltage from being applied to the first power source and the second power source.

9. The system according to claim 1, further comprising a transport/user mode control circuit, configured to prohibit the third power source from discharging when an electronic device accommodating the multiple power control system is not activated and in a transport mode, and to allow the third power source to discharge in response to the electronic device being activated and in a user mode.

10. The system according to claim 9, wherein the transport/user mode control circuit comprises:
a second diode D2, whose anode is connected to the controller,
a ninth NMOS transistor Q9, whose gate is connected to a first end of a ninth resistor, whose drain is connected to a second end of the ninth resistor and the source of the eighth PMOS transistor Q8, whose source is connected to the power source output interface,
a tenth PMOS transistor Q10, whose gate is connected to the cathode of the second diode D2, whose drain is connected to the first end of the ninth resistor and the gate of the ninth NMOS transistor Q9, and whose source is grounded.

11. The system according to claim 1, wherein the charging management circuit further comprises:
a voltage detection circuit, configured to detect the voltage value of the third power source and provide the detected voltage value to the controller; and
a charging circuit, configured to receive the control signal from the controller and selectively use the first power source or the second power source to charge the third power source.

12. The system according to claim 11, wherein the controller generates the control signal for controlling charging of the third power source in response to the detected voltage value of the third power source being lower than a predetermined threshold.

13. The system according to claim 1, wherein the first power source is an adapter power source or a power pack or a mobile power source, the second power source is a mobile power source, and the third power source is a built-in power source, and
the system further comprises a built-in power line, a first end of the built-in power line having a predetermined type of interface suitable for being connected to an external power source, and a second end of the built-in power line being connected to the first power source,
wherein the first power source has a higher priority than the second power source to be selected as the output power source, and the second power source has a higher priority than the third power source to be selected as the output power source.

14. An electrical device, comprising:
a built-in chargeable power source; and
a priority-based multiple power source control system according to any one of claims 1 to 13.

15. A control method for a priority-based multiple power source control system, wherein the multiple power source control system being able to connect a first power source of a first type, a second power source of a second type, and a third power source of a rechargeable type, the method comprising:
in response to the first power source being connected, a power source output interface of the multiple power source control system selects the first power source as an output power source, and in response to the second power source being connected and the first power source being not connected, the power output interface selects the second power source as the output power source;
acquiring a voltage value of the third power source and connection status of the first power source and the second power source to generate a control signal for controlling charging of the third power source based on the voltage value and the connection statuses; and
selectively using the first power source or the second power source to charge the third power source based on the control signal of the controller.
